Europäisches Patentamt

European Patent Office

Office européen des brevets

(19)

(11) Veröffentlichungsnummer: **0 075 693 B2**

(12) # NEUE EUROPÄISCHE PATENTSCHRIFT

(45) Veröffentlichungstag der neuen Patentschrift:
24.04.91 Patentblatt 91/17

(51) Int. Cl.⁵ : **B60K 20/02**

(21) Anmeldenummer: 82107274.1

(22) Anmeldetag: 11.08.82

(54) Gangwähler für ein Getriebe.

Die Akte enthält technische Angaben, die nach dem Eingang der Anmeldung eingereicht wurden und die nicht in dieser Patentschrift enthalten sind.

(30) Priorität: 30.09.81 DE 3138827

(43) Veröffentlichungstag der Anmeldung:
06.04.83 Patentblatt 83/14

(45) Bekanntmachung des Hinweises auf die Patenterteilung:
02.04.86 Patentblatt 86/14

(45) Bekanntmachung des Hinweises auf die Entscheidung über den Einspruch:
24.04.91 Patentblatt 91/17

(84) Benannte Vertragsstaaten:
AT CH DE FR GB IT LI SE

(56) Entgegenhaltungen:
DE-A- 1 954 721
DE-A- 2 343 711
DE-A- 2 453 719
DE-B- 1 188 166
DE-B- 2 502 578
DE-B- 2 646 393
DE-C- 693 042

(73) Patentinhaber: WABCO Westinghouse Fahrzeugbremsen GmbH
Am Lindener Hafen 21 Postfach 91 12 80
W-3000 Hannover 91 (DE)

(72) Erfinder: Reinecke, Erich
Kastanieneck 6
W-3167 Burgdorf (DE)

(74) Vertreter: Schrödter, Manfred
WABCO Westinghouse Fahrzeugbremsen GmbH Am Lindener Hafen 21 Postfach 91 12 80
W-3000 Hannover 91 (DE)

EP 0 075 693 B2

## Beschreibung

Die Erfindung bezieht sich auf einen Gangwähler für ein Getriebe in Kraftfahrzeugen gemäss dem Oberbegriff des Patentanspruchs 1. Ein derartiger Gangwähler ist beispielsweise aus DE-A-2 502 578 bekannt.

Bei hilfskraftbetätigten Getrieben werden die Gänge durch Arbeitszylinder eingelegt, die meist im Getriebe angeordnet sind. Zur Steuerung der Druckmittelzufuhr zu den Arbeitszylindern dienen Magnetventile. Diese werden über die Stellung eines Schalthebels, gegebenenfalls in Verbindung mit anderen Daten – wie Getriebeeingangs- und Ausgangsdrehzahl – angesteuert. Die Daten werden im allgemeinen einer Elektronik eingegeben, müssen also als elektrische Grössen vorliegen. Es ist deshalb erforderlich, die Stellung des Ganghebels, welche dem gewünschten Gang entspricht, abzutasten und in ein entsprechendes elektrisches Signal umzuwandeln.

Es ist bereits aus der oben genannten DE-A-2 502 578 bekannt, die Stellung eines Schalthebels mittels Mikroschaltern abzutasten. Die Mikroschalter werden hier jedoch nicht unmittelbar durch den Schalthebel, sonden durch eine vom Schalthebel verstellbare Schaltwalze betätigt. Durch die Signale der Mikroschalter wird über eine Elektronik und einen Arbeitszylinder eine Servounterstützung der Getriebeschaltung bewirkt.

Die Arretierung erfolgt über eine mit einem Rastenblech zusammenwirkende Kugel aim Forstate des Schalthebels.

Ferner ist es aus der DE-A-2453719 bekannt, bei einem Lenkstockschalter für kraftfahrzeuge eine berührungslose Abtastung vorzusehen. Dabei kann an dem einen Fortsatzbildenden Ende des Schalthebels ein Magnet zur Ansteuerung einer Schaltstufe angeordnet sein.

Der Erfindung liegt die Aufgabe zugrunde, einen Gangwähler der eingangs genannten Art anzugeben, der eine zuverlässige, verschleisslose Erfassung der Stellungen eines Schalthebels für eine Getriebeschaltung ermöglicht.

Diese Aufgabe wird durch die im Patentanspruch 1 enthaltene Erfindung gelöst. Der Unteransprüch enthält eine zweckmässige Ausgestaltung der Erfindung.

Die Erfindung wird im folgenden anhand einer Zeichnung, in der eine Ausführungsbeispiel dargestellt ist, näher erläutert.

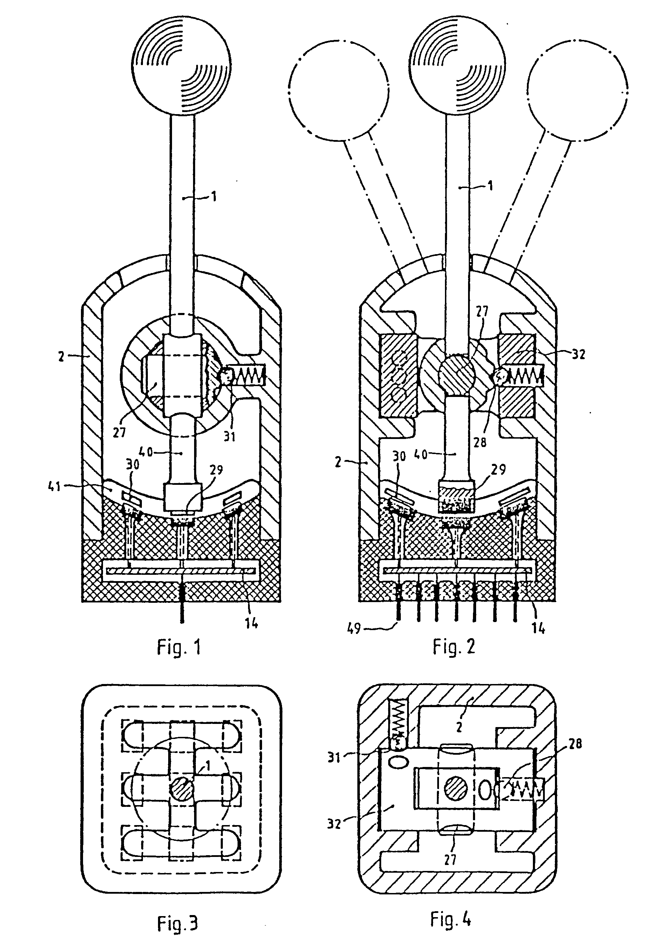

In den Fig. 1 bis 4 ist eine andere Ausführungsform des Gangwählers dargestellt. Dieser besteht aus einem Gehäuse 2, in den ein Schalthebel 1 hineinragt. Dieser ist wiederum kardanisch aufgehängt. Zur Einstellung der Schaltgasse ist der Schalthebel 1 um eine Achse 27 senkrecht zur Zeichenebene schwenkbar. Diese Schwenkbewegung ist in drei Stellungen durch eine Arretiervorrichtung 28 arretierbar (vgl. Fig. 16). Zur Einstellung des Ganges (siehe Fig. 15) ist der Schalthebel 1 um eine Achse 32 schwenkbar. Die drei Stellungen in dieser Bewegung werden durch eine Arretiervorrichtung 31 festgelegt.

Zur Identifizierung des eingelegten Ganges ist der Schalthebel 1 unterhalb der kardanischen Aufhängung durch einen Fortsatz 40 verlängert, der am Ende einen Dauermagneten 29 trägt. Die zugehörigen Sensoren 30 sind unterhalb des Magneten 29 auf einer Hohlkalotte 41 angordnet. Dabei entspricht jedem Gang ein eigener Sensor.

Die Sensoren sind an eine Platine 14 angeschlossen, die noch weitere elektronische Bauelemente trägt. Der elektrische Anschluss an die Platine 14 erfolgt über eine Steckvorrichtung 49. Ein Vorteil der Bauweise gemäss Fig. 1 ist die geringen Abmessungen des Gangwählers.

## Ansprüche

1. Gangwähler für ein Getriebe in Kraftfahrzeugen mit einem Schalthebel (1) und einem Gehäuse (2), bei dem das Einlegen der Gänge mittels Hilfskraft erfolgt, wobei der Schalthebel (1) unterhalb einer kardanischen Aufhängung durch einen Fortsatz (40) verlängert und mittels einer Arretiervorrichtung in jeder Gangstellung arretierbar ist, dadurch gekennzeichnet, daß am Ende des Fortsatzes (40) ein Dauermagnet (29) befestigt ist, dem zur berührungsloser Abtastung des eingelegten Ganges mehrere magnetfeldempfindliche Sensoren (30) gegenüberliegen, wobei bei Betätigung des Schalthebels (1) in allen vorgesehenen Stellungen jeweils ein anderer magnetfeldempfindlicher Sensor (30) beeinflußt wird, und daß die Arretiervorrichtung (28, 31) unmittelbar auf jed der Achsen (27, 32) der kardanischen Aufhängung wirkt.

2. Gangwähler nach Anspruch 1, dadurch gekennzeichnet, daß die Sensoren (30) auf einer Hohlkalotte (41) angeordnet sind.

## Claims

1. A selector for a gear-box in motor vehicles, having a gear lever (1) and a housing (2) in which the engagement of the gears is effected with power assistance, the gear lever (1) being extended as a projection (40) underneath a cardan mounting and being capable of being held by means of a locking device in any desired gear position, characterised in that secured to the end of the projection (40) is a permanent magnet (29) opposite which, for the purpose of sensing without contact the gear that has been engaged, is a plurality of sensors (30) sensitive to magnetic fields, a different sensor (30) sensitive to magnetic fields being affected when the gear lever (1) is moved into each of the different positions provided, and that the holding device (28, 31) acts directly on each of the axes (27, 32) of the cardan mounting.

2. Selector according to claim 1, characterised in that the sensors (30) are arranged on a hollow spherical concavity (41).

**Revendications**

1. Sélecteur pour boîte de vitesses de véhicule, avec un levier de changement de vitesses (1) et un boîtier (2), dans lequel le passage des vitesses est commandé, le levier de changement de vitesses (1) étant prolongé sous une suspension par cardan par un prolongement (40) et pouvant être bloqué dans une position de vitesse quelconque, caractérisé en ce qu'à l'extrémité du prolongement (40) est fixé un aimant permanent (29) en regard duquel sont disposés plusieurs capteurs (30) sensibles au champ magnétique pour la détection sans contact de la vitesse passée, un autre capteur (30) sensible au champ magnétique étant influencé à chaque fois lors de l'actionnement du levier de changement de vitesses (1) dans toutes les positions prévues, et en ce que le dispositif de blocage (28, 31) agit directement sur chacun des axes (27, 32) de la suspension par cardan.

2. Sélecteur selon la revendication 1, caractérisé en ce que les capteurs (30) sont disposés sur une calotte creuse (41).

Fig. 1

Fig. 2

Fig. 3

Fig. 4